# EUROPÄISCHE PATENTSCHRIFT

(11) **EP 2 669 220 B1**
(45) Veröffentlichungstag und Bekanntmachung des Hinweises auf die Patenterteilung: **22.05.2019**
(21) Anmeldenummer: 13169625.4
(22) Anmeldetag: 29.05.2013
(51) Int. Cl.: B65G 23/08

(54) **Motorbetriebene Förderrolle für Förderanlagen zum Fördern von Behältern, Paletten und dergleichen**
Motor-driven conveyor roller for conveyor systems for conveying containers, pallets and the like
Rouleau de transport motorisé pour installations de transport de récipients, palettes et analogues

(30) Priorität: 01.06.2012 DE 202012005380 U
(43) Veröffentlichungstag der Anmeldung: 04.12.2013
(73) Patentinhaber: Interroll Holding AG, 6592 Sant' Antonino (CH)
(72) Erfinder: Lindemann, Harry, 42929 Wermelskirchen (DE)
(74) Vertreter: Eisenführ Speiser

(56) Entgegenhaltungen:
- DE-A1-102010 014 174
- FR-A1- 2 826 070
- US-A1- 2011 062 000

## Beschreibung

Die Erfindung betrifft eine motorbetriebene Förderrolle für Förderanlagen zum Fördern von Behältern, Paletten und dergleichen, mit einem Rollenkörper, dessen Außenumfangsfläche eine Auflagefläche für Fördergut darstellt, einer Antriebseinheit, die innerhalb eines Innenraums des Rollenkörpers angeordnet ist, einer zur Übertragung eines Drehmoments von der Antriebseinheit auf eine Innenumfangsfläche des Innenraums des Rollenkörpers ausgebildete Kupplungseinheit, welche eine Spannbuchse, einen zu der Spannbuchse axial beweglichen Spannring, ein Befestigungselement zum Halten einer axialen lagerndes Spannrings zu der Spannbuchse in einer gespannten Position, und einen Anpressring, der zwischen einer Spannfläche der Spannbuchse und einer Spannfläche des Spannrings in der gespannten Position festgesetzt ist und in der gespannten Position außenumfänglich im Reibschluss mit der Innenumfangsfläche des Innenraums des Rollenkörpers ist, umfasst. Ein weiterer Aspekt der Erfindung ist ein Verfahren zur Herstellung einer solchen motorbetriebenen Förderrolle.

Motorbetriebene Förderrollen dieser Bauart werden für unterschiedliche Zwecke in logistischen Anwendungen eingesetzt. So können sie beispielsweise in der Palettenförderung, bei der Förderung von Paketen in Paketversandzentren, zur Förderung von Behältern in Lagern unterschiedlicher Art oder zum Gepäcktransport in Flughäfen und in zahlreichen anderen Anwendungen eingesetzt werden. Dabei werden solche motorbetriebenen Förderrollen regelmäßig in Förderstreckeneingesetzt , die aus mehreren nebeneinander angeordneten Rollen besteht, deren obere Umfangsfläche jeweils zur Aufnahme des Fördergutes dient. In diesen Förderstrecken sind einerseits Leerlaufrollen angeordnet, die antriebslos sind und lediglich in einem Fördergestell drehbar gelagert sind. Weiterhin sind in diesen Förderstrecken angetriebene Förderrollen angeordnet, die motorbetrieben sind und durch eine elektrische Antriebseinheit in Rotation versetzt werden. Diese motorbetriebenen Förderrollen sind solcherart aufgebaut, dass die Antriebseinheit innerhalb der Rolle selbst angeordnet ist, sodass keine außerhalb des Rollenkörpers angeordneten mechanischen Komponenten erforderlich sind, um die Rotation der Rolle zu erzeugen. Die motorbetriebenen Förderrollen dienen einerseits dazu, unmittelbar über die äußere Umfangsfläche ihres Rollenkörpers das Fördergut zu transportieren. Andererseits können mittels einer Übertragung der Rotation der motorbetriebenen Förderrolle auf eine oder mehrere Leerlaufrollen mittels eines Übertragungselementes, beispielsweise eines Riemenantriebs, durch die motorbetriebene Förderrolle auch die Leerlaufrollen in Rotation versetzt werden, um auch über deren äußere Umfangsfläche das Fördergut anzutreiben.

Aus US2011/0062000A1 ist eine motorbetriebene Förderrolle für Förderanlagen zum Fördern von Behältern, Paletten und dergleichen, bekannt, mit:
- einem Rollenkörper, dessen Außenumfangsfläche eine Auflagefläche für Fördergut darstellt,
- einer Antriebseinheit, die innerhalb eines Innenraums des Rollenkörpers angeordnet ist,
- einer zur Übertragung eines Drehmoments von der Antriebseinheit auf eine Innenumfangsfläche des Innenraums des Rollenkörpers ausgebildete Kupplungseinheit, welche
   -- eine Spannbuchse,
   -- einen zu der Spannbuchse axial beweglichen Spannring,
   -- ein Befestigungselement, welches zusammen mit einer zentralen Schraube und anderen Kupplungselementen einer axialen Lage des Spannrings zu der Spannbuchse in einer gespannten Position hält, und
   -- einen Anpressring, der zwischen einer Spannfläche der Spannbuchse und einer Spannfläche des Spannrings in der gespannten Position festgesetzt ist und in der gespannten Position außenumfänglich im Reibschluss mit der Innenumfangsfläche des Innenraums des Rollenkörpers ist,umfasst,
   wobei die Spannbuchse des Kupplungselements einen inneren Hohlraum aufweist und das Befestigungselement radial auswärts von diesem Hohlraum angeordnet ist.

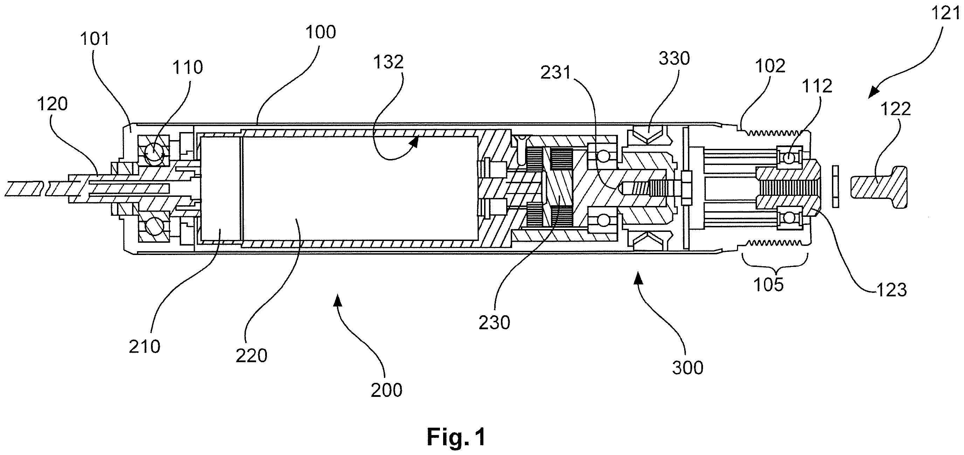

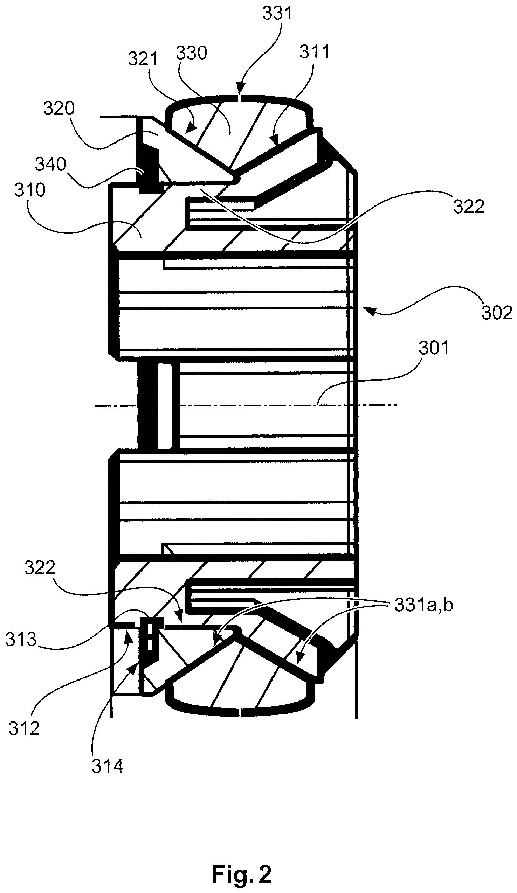

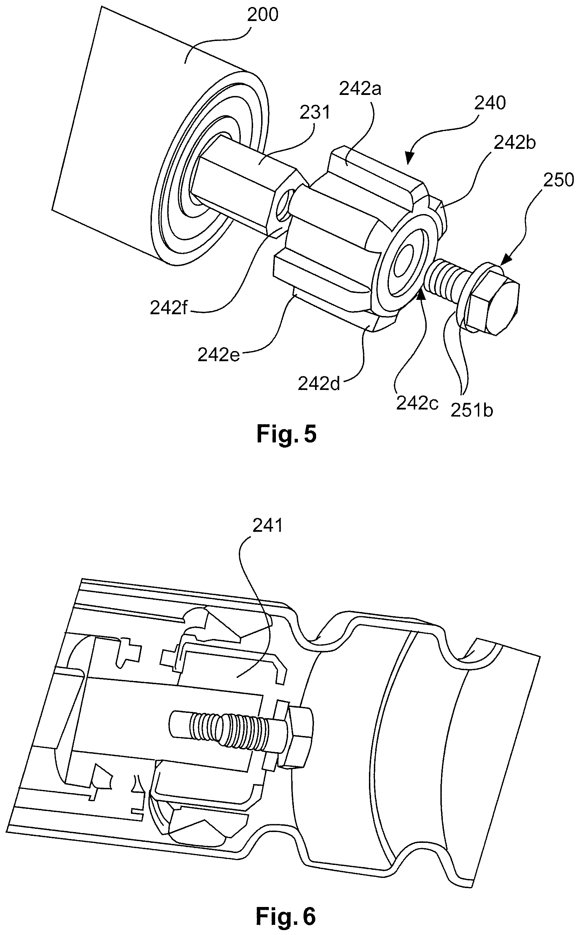

Aus EP 1 656 312 B1 ist eine motorbetriebene Förderrolle nach dem Oberbegriff des Anspruchs 1 bekannt, bei der die Antriebseinheit innerhalb der Förderrolle angeordnet ist. Diese motorbetriebene Förderrolle weist eine Andruckeinheit auf, welche eine erste und zweite Scheibe umfasst, die außenumfänglich eine V-Form definieren, in die ein elastischer Anpressring eingelegt ist. Die beiden Scheiben können mittels einer Zentralschraube auf eine konische Abtriebswelle der Antriebseinheit geschoben und zusammengepresst werden. Dabei wird zwischen einer der beiden Scheiben eine kraftschlüssig drehmomentfeste Verbindung zur Abtriebswelle hergestellt und zugleich der Anpressring aus einem Zustand, in dem er sich in den Innenumfang des Rollenkörpers einführen lässt, in einen gespannten Zustand zusammengepresst , in dem der Anpressring nach radial außen verformt ist, so dass er einen Presssitz sowohl zu den beiden konischen Spannflächen der Scheiben, welche die V-Form ausbilden als auch zur Innenumfangsfläche des Rollenkörpers ausbildet. Durch diese kraftschlüssige Kopplung wird das Antriebsdrehmoment der Antriebseinheit auf den Rollenkörper übertragen. Die Offenbarung der EP 1 656 312 B1 bezüglich der Anordnung der Antriebseinheit in Bezug auf den Rollenkörper gemäß den Figuren 1 und 2, den Absätzen [0068] bis [0087] sowie die Drehmomentübertragung über die Andruckeinheit gemäß Fig. 5 und den Abschnitten [0088] bis [0094] wird einbezogen.

Mit der solcherart vorbekannten motorbetriebenen Förderrolle wird eine zuverlässige Übertragung des Drehmomentes der Antriebseinheit auf den Rollenkörper erzielt, wobei ein definiertes Drehmoment und eine definierte Drehmomentgrenze durch die Andruckeinheit eingestellt werden können. Es ist die Aufgabe der vorliegenden Erfindung, diese motorbetriebene Förderrolle solcherart weiterzubilden, dass die im Betrieb auftretenden Geräusche der Förderrolle vermindert werden.

Diese Aufgabe wird erfindungsgemäß gelöst durch eine motorbetriebene Förderrolle nach Anspruch 1.

Der Erfindung liegt die Erkenntnis zugrunde, dass konventionelle Möglichkeiten wie Optimierung der Materialpaarungen in einem Getriebe oder Radiallager, geometrische Optimierung einer Verzahnung in einem Getriebe oder eines Lagers und Optimierung des elektrischen Antriebsmotors nur in begrenztem Ausmaß eine Geräuschreduktion erzielen können, hiermit aber nicht ein bestimmtes Geräuschniveau unterschritten werden kann. Dies liegt nach einer der Erfindung zugrunde liegenden Untersuchung darin, dass durch die montagebedingten Toleranzen vorbekannter Förderrollen eine Koaxialabweichung in einem zwar sehr geringen, aber für die Geräuschentwicklung relevanten Ausmaß im Bereich der Kupplungseinheit in Bezug auf die Antriebseinheit auftritt. Diese Koaxialitätsabweichung hat zur Folge, dass auf die Antriebseinheit eine radial wirkende Kraft ausgeübt wird, die eine Geräuschentwicklung zur Folge hat. Diese Geräuschentwicklung kann beispielsweise in einer Geräuschentwicklung durch ein antriebsausgangsseitiges Radiallager verursacht sein, insbesondere aber durch ein Getriebe, welches auf der Antriebsausgangsseite zwischen der Kupplungseinheit und einem Antriebsmotor der Antriebseinheit angeordnet ist. Ein solches Getriebe kann beispielsweise als Planetengetriebe ausgeführt sein und verfügt als solches zwar über eine insgesamt koaxiale Führung von Eingangs- und Ausgangswellenachse, verursacht aber bei Radialkräften, die durch eine Koaxialitätsabweichung hervorgerufen werden, Geräusche, die sich als Gesamtgeräusch einer Förderrolle bemerkbar machen.

Durch die erfindungsgemäße Anordnung des Befestigungselementes radial auswärts von einem Hohlraum der Spannbuchse wird die geometrische Toleranz hinsichtlich dieses spezifischen geometrischen Maßes der Koaxialitätsabweichung in entscheidender Weise verbessert. Anstelle der aus dem Stand der Technik vorbekannten zentralen Schraube, welche die Verspannung von Spannscheibe und Spannbuchse bewirkt und hierbei zugleich die Befestigung eines der beiden Elemente auf der Getriebeausgangswelle mit einem kraftschlüssigen Sitz bewirkt, wird die Montage von Spannring zu Spannbuchse erfindungsgemäß durch ein Befestigungselement erreicht, welches an einem größeren Durchmesser positioniert wird. Hierdurch wird die Koaxialität, das heißt die toleranzbedingte Lage der Kupplungseinheit in Bezug auf die Antriebseinheit entscheidend erhöht und hierdurch unerwünschte Radialkräfte, die durch eine Koaxialitätsabweichung zwischen Kupplungseinheit und Antriebseinheit hervorgerufen werden, weitestgehend vermieden. Ein antriebsausgangsseitiges Getriebe oder Lager wird aus diesem Grund mit geringeren Radialkräften belastet als im Stand der Technik und hierdurch die Geräuschentwicklung herabgesetzt.

Erfindungsgemäß wird ermöglicht, dass die Befestigung der Kupplungseinheit an der Abtriebswelle der Antriebseinheit unabhängig von der Verspannung von Spannbuchse und Spannring erfolgen kann. Insbesondere bedeutet diese Unabhängigkeit, dass die Verspannung von Spannring und Spannbuchse zueinander zur Herstellung des Reibschlusses über den Anpressring an die Innenfläche des Rollenkörpers zeitlich beliebig versetzt zur Montage von Antriebseinheit und Kupplungseinheit zueinander erfolgen kann, das heißt es kann Antriebseinheit und Kupplungseinheit montiert werden, nachdem der Reibschluss zum Rollenkörper über den Anpressring hergestellt wurde oder davor. Weiterhin kann durch die unabhängige Montage der Kupplungseinheit selbst und der Kupplungseinheit zur Antriebseinheit eine für die Fertigungs- und Montagetoleranzen vorteilhafte Geometrie bei der Verbindung von Kupplungseinheit und Antriebseinheit realisiert werden. So wird einerseits durch die erfindungsgemäße Anordnung des Befestigungselementes radial auswärts von einem Hohlraum der Spannbuchse Platz geschaffen, um auch die Wirkebene der Verbindungsfläche, also den effektiven Kontaktbereich zwischen Kupplungselement und Antriebseinheit, radial weiter außen, also mit einem größeren Außendurchmesser, zu gestalten als dies im Stand der Technik möglich war. Zum anderen wird durch die erfindungsgemäße Anordnung des Befestigungselementes es ermöglicht, dass fertigungs- und montagetechnisch mit höherer Fertigungsgenauigkeit in radialer Richtung realisierbare Verbindungsweisen ausgeführt werden, und zwar ohne dass hierzu aufwändige Fertigungstechniken eingesetzt werden müssten, die eine Erhöhung der Fertigungskosten verursachen würden und ohne dass hierzu auf kostspielige Präzisionsteile zurückgegriffen werden müsste. So kann beispielsweise mit dem erfindungsgemäß bereitgestellten Hohlraum innerhalb des Kupplungselementes, der nicht durch eine Raumforderung des Befestigungselementes eingeschränkt wird, da dieses radial auswärts des Hohlraums angeordnet ist, eine formschlüssige, fertigungs- und montagetechnisch vorteilhafte Verbindungsweise zwischen der Kupplungseinheit und der Antriebseinheit realisiert werden, die weiterhin vorzugsweise solcherart ausgeführt sein kann, dass sie ein Spiel in radialer Richtung in solchem Ausmaß ermöglicht, dass Radialkräfte durch Verspannungen, die aus der Verbindung von Kupplungseinheit und Antriebseinheit resultieren könnten, vollständig vermieden werden.

Der erfindungsgemäß bereitgestellte Hohlraum in der Spannbuchse erstreckt sich vorzugsweise von der Mittelachse der Spannbuchse nach radial auswärts. Die Spannbuchse kann vorzugsweise solcherart ausgeführt sein, dass sie außerhalb dieses Hohlraums einen ringförmigen Abschnitt aufweist und auf dessen Umfangsfläche kann vorzugsweise die Spannscheibe axial beweglich angeordnet sein. Die Spannscheibe kann ihrerseits mit einem größeren Spiel auf dieser Umfangsfläche der Spannbuchse beweglich sein, da eine Zentrierung der Spannscheibe durch ihre Spannfläche, den Anpressring und die Spannfläche der Spannbuchse erfolgt. Die Spannfläche der Spannbuchse kann an der Spannbuchse in hoher koaxialer Genauigkeit zu der Mittellängsachse der Spannbuchse und der Geometrie hergestellt werden, mittels derer die Spannbuchse mit der Antriebseinheit mechanisch gekoppelt wird. Auf diese Weise wird die Koaxialität mit der erfindungsgemäßen Ausgestaltung in einer wesentlich präziseren Weise bereitgestellt als im Stand der Technik.

Der innere Hohlraum der Spannbuchse kann grundsätzlich in verschiedenen Geometrien ausgeführt sein. Darunter können Geometrien sein, bei denen sich der Außendurchmesser des inneren Hohlraums in axialer Richtung verändert und der Hohlraum grundsätzlich aus zylinderförmigen oder konischen Abschnitten besteht. Weiterhin kann der Hohlraum andere, von der Zylinder- oder Konusform abweichende Geometrien aufweisen, beispielsweise Geometrien, bei denen sich der Innendurchmesser in radialer Richtung verändert wie Mehrkantgeometrien oder andere, von der Kreisform abweichende Querschnitte. Mit diesen Ausgestaltungen kann insbesondere eine formschlüssige Verbindung zur Antriebseinheit hergestellt werden.

Grundsätzlich ist zu verstehen, dass das Befestigungselement nicht notwendigerweise hinsichtlich der axialen Position übereinstimmend oder überschneidend zu dem Hohlraum angeordnet sein muss, sondern stattdessen auch axial versetzt zu dem Hohlraum angeordnet sein kann und erfindungsgemäß ebenfalls umfasst sind Ausführungsformen, bei denen das Befestigungselement in einem Bereich angeordnet ist, in den sich der Hohlraum der Spannbuchse nicht mehr axial erstreckt.

Grundsätzlich ist die Kupplungseinheit zur Übertragung des Drehmoments mit der Antriebseinheit drehmomentfest verbunden. Diese drehmomentfeste Verbindung kann zwischen der Spannbuchse und der Antriebseinheit oder zwischen dem Spannring und der Antriebseinheit oder zwischen sowohl der Spannbuchse als auch dem Spannring und der Antriebseinheit ausgebildet sein.

Gemäß einer ersten bevorzugten Ausführungsform ist vorgesehen, dass das Befestigungselement integral an dem Spannring ausgebildet ist, oder das Befestigungselement ein von dem Spannring separates Bauteil ist. Bei einer integralen Ausbildung des Befestigungselements an dem Spannring kann das Befestigungselement entweder als vormontiertes Bauteil an dem Spannring befestigt sein oder einstückig mit dem Spannring ausgeführt sein. Befestigungselement und Spannring werden in diesem Fall zusammen relativ zu der Spannbuchse bewegt und auf dieser montiert und in der gespannten Position festgesetzt. Ist das Befestigungselement ein von dem Spannring separates Bauteil, so können Spannring und Befestigungselement unabhängig voneinander während des Montagevorgangs gehandhabt werden, insbesondere kann zunächst der Spannring an der Spannbuchse positioniert werden und dann mittels des hierauf folgenden Positionieren und Befestigen des Befestigungselementes an der Spannbuchse in seiner Position festgesetzt werden. Dabei kann der Spannring mittels eines Werkzeugs unmittelbar solcherart verspannt werden, dass der Anpressring nach radial auswärts in die gespannte Position verformt wird oder diese Spannkraft kann über das Befestigungselement auf den Spannring übertragen werden. Grundsätzlich ist zu verstehen, dass das Befestigungselement vorzugsweise ein Bauteil ist, das auf einer Außenumfangsfläche, die in geeigneter Weise gestaltet ist, solcherart festgesetzt werden kann, dass eine axiale Beweglichkeit in zumindest einer Richtung verhindert wird.

Die erfindungsgemäße Förderrolle kann weiter fortgebildet werden durch einen Lagerzapfen, der Mittel zur drehmomentfesten Befestigung an einem Fördergestell aufweist, an dem der Rollenkörper drehbar gelagert ist und an dem die Antriebseinheit drehmomentfest befestigt ist. Der Lagerzapfen dient dazu, um eine drehmomentfeste Verbindung zwischen einem Gestell, in welches die Förderrolle montiert werden kann und der Antriebseinheit herzustellen. Zu diesem Zweck kann der Lagerzapfen einstückig mit der Antriebseinheit verbunden oder an dieser mittels Befestigungselementen drehmomentfest befestigt sein. Auf der zum Gestell weisenden Seite kann am Lagerzapfen ein Außengewinde ausgebildet sein, auf dem eine Mutter aufgeschraubt werden und hierdurch mittels Reibschluss eine drehmomentfeste Verbindung zum Gestell herstellen kann. Alternativ oder zusätzlich kann der Lagerzapfen mit einer von der kreisrunden Form abweichenden Querschnittsgeometrie ausgeführt sein, um einen Formschluss in einer entsprechenden Öffnung des Gestells herzustellen, beispielsweise indem ein Mehrkantabschnitt an dem Lagerzapfen ausgebildet ist. Der Lagerzapfen kann weiterhin mit einer axialen Längsbohrung versehen sein, um durch diese Längsbohrung Versorgungs- und Steuerleitungen zu leiten, über welche die Antriebseinheit mit Energie und Steuersignalen versorgt wird.

Gemäß einer weiteren bevorzugten Ausführungsform ist vorgesehen, dass der innere Hohlraum der Spannbuchse einen kleinsten Innendurchmesser aufweist und das Befestigungselement ringförmig ausgebildet ist und einen Innendurchmesser aufweist, der größer als der kleinste Innendurchmesser ist. Bevorzugt ist der innere Durchmesser des Befestigungselementes größer als der kleinste Innendurchmesser des Hohlraums, was insbesondere dann erforderlich ist, wenn das Befestigungselement in axialer Position übereinstimmend zu diesem Innendurchmesser angeordnet ist oder beim Montagevorgang über diesen Innendurchmesser des Hohlraums bewegt wird. Für eine weiter verbesserte erfindungsgemäße Funktion kann der Innendurchmesser des Befestigungselementes auch größer als der größte Innendurchmesser des Hohlraums sein. Noch weiter ist es bevorzugt, dass das Befestigungselement in der gespannten Position formschlüssig mit der Spannbuchse verbunden ist. Durch eine solche formschlüssige Verbindung wird einerseits die Übertragung und Sicherung hoher Spannkräfte zum Verspannen des Anpressrings erzielt. Weiterhin vorteilhaft an einer formschlüssigen Verbindung des Befestigungselementes mit der Spannbuchse ist die dadurch erreichbare definierte Position und Spannkraft, die über die solcherart zueinander positionierten Spannflächen auf den Anpressring ausgeübt wird.

Noch weiter kann die erfindungsgemäße Förderrolle fortgebildet werden, indem das Befestigungselement aus einer Spannposition reversibel elastisch in eine Montageposition verformbar ist und in der Montageposition vorgespannt ist zur Rückverformung in die Spannposition. Mit einer solchen Ausgestaltung ist es einerseits möglich, eine effiziente Montage des Befestigungselementes mit einem einfachen Montagevorgang, gegebenenfalls unter Verwendung eines Spezialwerkzeugs durchzuführen. Weiterhin kann durch eine solche Ausgestaltung des Befestigungselementes eine zerstörungsfreie Demontage durchgeführt werden, was für Wartungszwecke erforderlich und vorteilhaft sein kann.

Erfindungsgemäß weist die Spannbuchse an einer Außenumfangsfläche einen Absatz oder eine Nut auf und das Befestigungselement ist vorzugsweise ein Spiralfederring, der elastisch vorgespannt zur formschlüssigen Verankerung in diesem Absatz/dieser Nut ist. Dies ist für eine effiziente Montage und zuverlässige Einstellung einer vorbestimmten Spannkraft auf den Anpressring bevorzugt, da durch den Absatz bzw. die Nut eine definierte Position des Befestigungselementes an der Spannbuchse erzielt wird und folglich die Spannkraft, mit welcher der Anpressring nach radial auswärts verformt wird, auf ein ebenso vorbestimmtes Maß definiert wird. Ein Spiralfederring lässt sich durch eine entsprechende Spannzangenvorrichtung von einem kleinen auf einen großen Innendurchmesser elastisch verformen und kann aus dieser nach radial auswärts elastisch verformten Position sich wiederum radial einwärts verformen und hierbei in einer umlaufenden Nut oder an einem umlaufenden Absatz formschlüssig axial festgesetzt werden.

Noch weiter ist es bevorzugt, dass die Spannbuchse drehmomentfest mit einer Abtriebswelle der Antriebseinheit gekoppelt ist. Durch eine drehmomentfeste Kopplung der Spannbuchse an einer Abtriebswelle der Antriebseinheit wird eine direkte Drehmomentübertragung von der Antriebseinheit über die Spannbuchse auf den Anpressring erreicht und hierdurch ein vorteilhafter Kraftfluss realisiert. Die drehmomentfeste Kopplung kann insbesondere durch einen Formschluss oder einen Reibschluss erfolgen, wobei eine formschlüssige Verbindung aufgrund des dabei realisierbaren leichten Radialspiels bevorzugt ist, um das Einwirken unerwünschter radialer Kräfte aufgrund einer toleranzbedingten Verspannung auf die Antriebseinheit zu vermeiden.

Dabei ist es noch weiter bevorzugt, dass ein Abschnitt der Antriebseinheit, insbesondere eine Abtriebswelle oder ein Abschnitt eines Antriebsgetriebes innerhalb des Hohlraums der Spannbuchse angeordnet ist. Durch diese Anordnung wird eine besonders kurze Bauform der Förderrolle ermöglicht, da durch die Unterbringung des Abschnitts der Antriebseinheit axiale Baulänge eingespart werden kann, insbesondere die Kupplungseinheit eine axiale Länge aufweisen muss, die im Wesentlichen durch die axiale Länge des Anpressrings bestimmt ist und dieser im Wesentlichen entsprechen kann, ohne dass die Kupplungseinheit durch die drehmomentfeste Kopplung mit der Antriebseinheit zusätzliche axiale Längenanteile aufweist.

Noch weiter ist es bevorzugt, dass die Spannfläche der Spannbuchse und/oder die Spannfläche des Spannrings außenumfänglich konisch ausgebildet ist/sind. Durch die konische Ausbildung von einer der beiden Spannflächen oder beiden wird eine Verformung des Anpressrings nach radial auswärts in besonders effizienter Weise erreicht. Neben anderen Ausgestaltungen, wie beispielsweise konvexen oder konkaven, balligen oder gestuften Ausgestaltungen ist die konische Ausgestaltung für die erfindungsgemäße Ausübung einer nach radial auswärts wirkenden Anpresskraft am besten geeignet, um einen zuverlässigen Reibschluss zum Rollenkörper herzustellen.

Dabei ist es besonders bevorzugt, wenn die Spannfläche der Spannbuchse und die Spannfläche des Spannrings außenumfänglich eine V-Form definieren, in die der Anpressring eingelegt ist. Die solcherart definierte außenumfängliche V-Form kann mit einer spitzen oder breiten Basis des V ausgeführt sein, um einen Anpressring mit entsprechender axialer Breite aufnehmen zu können, insbesondere um auch Anpressringe mit einer axialen Länge aufnehmen zu können, welche größer als die radiale Dicke des Anpressrings ist. Der Konuswinkel der Spannflächen kann übereinstimmend sein, alternativ können die beiden Spannflächen auch mit unterschiedlichen Konuswinkeln ausgeführt sein.

Schließlich ist gemäß einer weiteren bevorzugten Ausführungsform der erfindungsgemäßen Förderrolle vorgesehen, dass im Hohlraum der Spannbuchse ein elastomeres Kupplungselement angeordnet ist, welches vorzugsweise formschlüssig in die Drehmomentübertragung zwischen Antriebseinheit und Spannbuchse zwischengekoppelt ist. Durch ein solches elastomeres Kupplungselement wird eine Drehmomentübertragung erzielt, welche zugleich eine Ruckdämpfung und folglich eine weitere Geräuschreduktion sowie eine Vermeidung von mechanischen Spitzenlasten erreicht. Die dabei vorgesehene Zwischenkopplung des elastomeren Kupplungselementes ist funktionell solcherart ausgeführt, dass ein von der Antriebseinheit ausgeübtes Drehmoment zunächst auf das elastomere Kupplungselement übertragen wird und von diesem elastomeren Kupplungselement dann weiter auf die Kupplungseinheit, insbesondere die Spannbuchse übertragen wird.

Ein weiterer Aspekt der Erfindung ist ein Verfahren nach Anspruch 14.

Durch das erfindungsgemäße Herstellungsverfahren wird ein Montagevorgang bereitgestellt, der in einer wirtschaftlich effizienten Weise ausgeführt werden kann und zugleich für eine hohe Koaxialität zwischen Antriebseinheit, Kupplungseinheit und Rollenkörper sorgt und demzufolge radiale Kräfte, die durch toleranzbedingte Koaxialitätsabweichungen auf die Antriebseinheit einwirken, weitestgehend vermeidet. Hierdurch wird eine Reduktion der Betriebsgeräusche der so montierten Förderrolle erzielt. Dabei ist zu verstehen, dass die Montageschritte in der Reihenfolge der zuvor erläuterten Aufzählung durchgeführt werden können, hiervon abweichend aber auch andere Abfolgen der einzelnen Montageschritte erfindungsgemäß umfasst sind.

Insbesondere ist es bei dem erfindungsgemäßen Verfahren bevorzugt, wenn das Befestigungselement radial auswärts von einem inneren Hohlraum der Spannbuchse des Kupplungselementes befestigt wird. Durch die Positionierung des Befestigungselementes wird eine Koaxialität erzielt.

Schließlich ist es weiter bevorzugt, dass die Abtriebswelle der Antriebseinheit drehmomentfest mit der Spannbuchse verbunden wird, nachdem die Außenumfangsfläche des Anpressringes an die Innenumfangsfläche des Innenraums des Rollenkörpers zur Erzeugung einer reibschlüssigen drehmomentübertragenden Verbindung angepresst wurde. Durch diese Montagefolge kann in besonders montagefreundlicher Weise die Kupplungseinheit innerhalb des Rollenkörpers vormontiert werden und hierauf folgend die Antriebseinheit in den Rundkörper eingeführt und drehmomentfest mit der Kupplungseinheit verbunden werden.

Eine bevorzugte Ausführungsform der Erfindung wird anhand der Figuren beschrieben. Es zeigen:
Figur 1 eine längsgeschnittene Seitenansicht einer erfindungsgemäßen Förderrolle.
Figur 2 eine Detailansicht der Kupplungseinheit der Förderrolle nach Figur 1,
Figur 3 eine perspektivische Explosionsdarstellung der Kupplungseinheit gemäß Figur 2,
Figur 4 eine perspektivische, längsgeschnittene Ansicht einer in einem Rollenkörper vormontierten Kupplungseinheit,
Figur 5 eine perspektivische Ansicht eines ruckdämpfenden Übertragungselementes zur formschlüssigen Drehmomentübertragung zwischen Antriebswelle der Antriebseinheit und Kupplungseinheit, und
Figur 6 eine perspektivische längsgeschnittene Ansicht einer im Rollenkörper montierten und mit einer Antriebseinheit gekoppelten Kupplungseinheit

Figur 1 zeigt den grundsätzlichen Aufbau einer motorbetriebenen Förderrolle nach der Erfindung. In einem Rollenkörper 100 ist an einem ersten Ende eine mit dem Rollenkörper fest verbundene Endkappe 101 eingesetzt, innerhalb der ein Wälzlager 110 angeordnet ist. Das Wälzlager 110 dient zur drehbaren Lagerung eines Lagerzapfens 120. Der Lagerzapfen 120 ist an einem nach außen weisenden Ende mit einem Außengewinde versehen, auf dem eine Mutter aufgeschraubt ist und mit Hilfe derer der Lagerzapfen drehmomentfest in einer Öffnung eines Gestells befestigt werden kann, in dem das Gestell zwischen der Mutter und einer auf dem Gewinde einwärts von der Mutter festgesetzten Hülse geklemmt wird.

Der Rollenkörper 100 weist eine innere Umfangsfläche 132 auf, die einen Innenraum in dem Rollenkörper nach radial begrenzt.

Der Lagerzapfen 120 ist hohl ausgeführt und durch die Innenbohrung des Lagerzapfens 120 werden Versorgungs- und Steuerleitungen zu einer Antriebseinheit 200 geleitet. Die Antriebseinheit 200 ist innerhalb des Rollenkörpers 100 angeordnet und drehmomentfest mit dem Lagerzapfen 120 verbunden. Die Antriebseinheit 200 weist an ihrem zum Lagerzapfen 120 weisenden Ende eine Steuerungselektronik 210 zur Ansteuerung eines elektrischen Antriebsmotors 220 auf, der vorzugsweise als bürstenloser, dreiphasiger Gleichstrommotor mit Innenläufern ausgeführt ist. Der Antriebsmotor 220 ist zwischen der Steuerungselektronik 210 und einem Planetengetriebe 230 der Antriebseinheit 200 angeordnet, welches an dem von dem Lagerzapfen 120 wegweisenden Ende der Antriebseinheit angeordnet ist.

Das Planetengetriebe 230 weist eine mit einem Sechskantquerschnitt ausgeführte Abtriebswelle 231 auf, die formschlüssig mit einer Kupplungseinheit 300 drehmomentfest verbunden ist. Die Kupplungseinheit 300 ist mittels eines Anpressringes 330 reibschlüssig an der Innenwand des Rollenkörpers festgesetzt und überträgt das Drehmoment der Antriebseinheit und die Rotation der Abtriebswelle auf den Rollenkörper. Der Rollenkörper dreht sich in Folge dessen mit dem Antriebsdrehmoment relativ zu dem Lagerzapfen und der Antriebseinheit 200.

An dem dem Lagerzapfen 120 gegenüberliegenden Ende des Rollenkörpers ist ein Kopfstück 102 drehmomentfest in den Rollenkörper eingesetzt. Dieses Kopfstück trägt mehrere W-förmige Umfangsnuten 105, mittels derer die Rotation und das Drehmoment der Förderrolle auf benachbarte Leerlaufrollen übertragen werden kann. Innerhalb des Kopfstücks 102 ist wiederum eine Wälzlagerung 112 für die Lagerung eines endseitigen Lagerzapfens 121 angeordnet. Der Lagerzapfen 121 wird gebildet durch eine mit einem Innengewinde versehene Hülse 123, die am Innenring des Wälzlagers 112 gelagert ist und eine Schraube 122, welche in dieses Innengewinde eingeschraubt werden kann, um die Förderrolle auch an diesem Ende an einem Gestell befestigen zu können.

Die Förderrolle kann grundsätzlich auch in anderer Weise als mittels des Lagerzapfens 121 in einem Gestell montiert sein. So ist beispielsweise auch eine Ausführung vorteilhaft und vom Schutzumfang umfasst, bei welcher anstelle des Lagerzapfens ein gewindeloser Zapfen zur Befestigung dient. Dieser Zapfen kann beispielsweise an der Förderrolle befestigt sein, insbesondere in Längsrichtung der Rolle axial verschieblich und nach außen federvorgespannt sein, um eine einfache und schnelle Montage der Förderrolle zu bewerkstelligen. Ein solcher, axial verschieblicher Lagerzapfen kann gegebenenfalls auch über ein zweites, innenliegendes Wälzlager im Kopfstück 102 gelagert sein, um ihn kippstabil an der Förderrolle zu befestigen und so die nicht kippstabile Befestigung eines solchen Lagerzapfens im Gestell zu kompensieren. In entsprechender Weise kann auch anstelle des Lagerzapfens 120 eine andere konstruktive Ausführung vorgesehen sein, insbesondere ein Lagerzapfen mit einer nicht zylindrischen Umfangsfläche, beispielsweise einem Vier- oder Sechskant, zur drehmomentfesten Montage der Förderrolle in einer entsprechend nicht-zylindrischen Öffnung im Gestell.

Die Figuren 2 bis 4 zeigen die Kupplungseinheit 300 in unterschiedlichen Ansichten. Wie aus diesen Figuren zu erkennen ist, umfasst die Kupplungseinheit eine Spannbuchse 310, einen Spannring 320, einen Anpressring 330 und ein Befestigungsringelement 340.

Die Spannbuchse 310 ist als ringförmiges Element ausgeführt, welches eine außenumfängliche konische Spannfläche 311 aufweist, die in einem Winkel von etwa 30 Grad zur Mittellängsachse 301 der Kupplungseinheit geneigt ist. Die Spannbuchse weist einen inneren Hohlraum 302 auf, der durch eine Umfangsfläche begrenzt ist, die sechs radiale Vertiefungen aufweist. Der innere Hohlraum stellt somit eine grobe Innenverzahnung bereit.

Benachbart zur Spannfläche 311 ist eine zylindrische äußere Umfangsfläche 312 angeordnet. Die zylindrische äußere Umfangsfläche 312 weist einen in Umfangsrichtung kontinuierlichen Bereich und einen in Umfangsrichtung durch sechs sich axial erstreckende Finger mit dazwischenliegenden Lücken unterbrochenen Bereich auf. In dem unterbrochenen Bereich 312b ist eine umlaufende Ringnut 313 in die äußere Umfangsfläche 312 eingestochen.

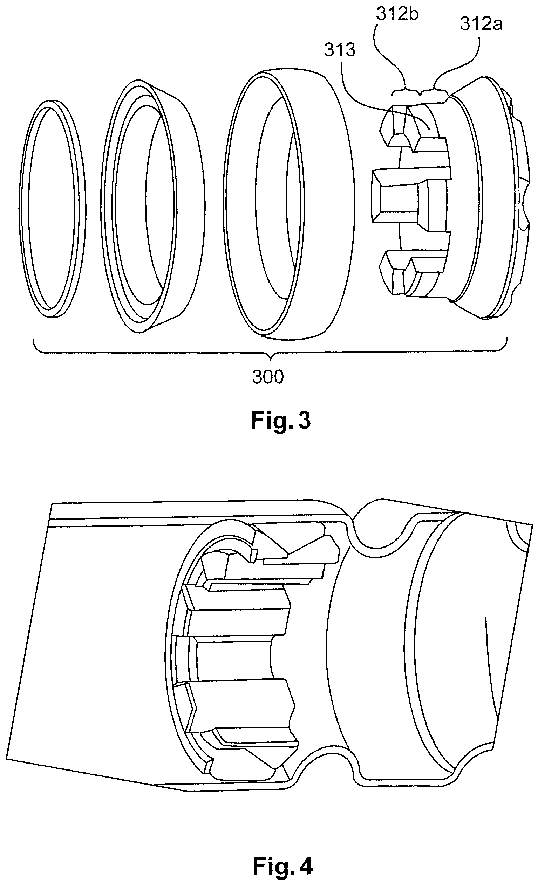

Der Spannring 320 weist eine konische äußere Umfangsfläche 321 auf, die entgegengesetzt konisch geneigt zu der Spannfläche 311 der Spannbuchse verläuft und ebenfalls einen Winkel von 30 Grad zur Mittellängsachse 301 der Spanneinheit einnimmt. Der Spannring weist eine zylindrische innere Umfangsfläche 322 auf, deren Innendurchmesser so groß bemessen ist, dass er über die äußere Umfangsfläche 312 der Spannbuchse geschoben werden kann. Wie aus den Figuren 2 und 4 ersichtlich, kann der Spannring demzufolge auf die Spannbuchse aufgeschoben werden.

Der Anpressring 330 ist aus einem Material hergestellt, welches eine leichtere elastische Verformbarkeit aufweist, als die Spannbuchse und der Spannring. Insbesondere können Spannbuchse und Spannring aus einem metallischen Werkstoff, beispielsweise Stahl oder Aluminium, bestehen, wohingegen der Anpressring 330 aus einem Kunststoff, beispielsweise einem gummielastischen Material wie Polyurethan, besteht. Der Anpressring 330 weist an seiner inneren Umfangsfläche eine V-Form auf, die kongruent zu der durch die Spannflächen 311, 321 gebildeten V-Form ist und zwei entsprechend konisch geneigte innere Umfangsflächen 331a, b umfasst. Die äußere Umfangsfläche 332 des Anpressrings ist zylindrisch mit einer geringen Balligkeit ausgeführt. Der Außendurchmesser des Anpressrings ist solcherart bemessen, dass er mit geringer Montagekraft oder kraftlos in ungespanntem Zustand in den Rollenkörper 100 eingeschoben werden kann.

Wie aus den Figuren 2 und 4, welche die Kupplungseinheit in einem montierten, gespannten Zustand zeigen, ersichtlich ist, kann der Spannring 320 solcherart auf die Spannbuchse aufgeschoben werden, dass sich die Spannflächen 311, 321 einander annähern und hierdurch den Anpressring 330 aufgrund der konischen Form der Spannflächen nach radial auswärts pressen. Hierdurch wird der Außendurchmesser des Anpressrings vergrößert und die äußere Umfangsfläche 332 des Anpressrings legt sich an die innere Umfangsfläche 132 des Rollenkörpers 100 an.

Der Spannring 320 wird mit Hilfe eines Werkzeugs, dass sich mit einem Haltefinger durch den inneren Hohlraum 302 der Spannbuchse erstreckt und an der in Figur 2 rechts liegenden Stirnseite der Spannbuchse 310 abstützt auf die Spannbuchse aufgeschoben und in axialer Richtung gepresst, bis eine Absatzfläche 314 mit ihrer Stirnfläche über die Ringnut 313 geschoben ist. In diesem Spannzustand kann der Spiralfederring 340, der durch elastische Verformung in seinem Innendurchmesser vergrößert ist, über die Umfangsfläche 312 der Spannbuchse geschoben werden und in der Ringnut formschlüssig verankert werden. Durch diesen Spiralfederring wird der Spannring 320 in der gespannten Position auf der Spannbuchse 310 festgesetzt und hierdurch der Anpressring 330 in der nach radial auswärts verformten Konfiguration gehalten. In dieser so definierten Spannposition übt der Anpressring eine Haftreibungskraft auf die beiden Spannflächen 311, 321 und die innere Umfangsfläche 132 des Rollenkörpers aus, die ausreichend hoch ist, um das Drehmoment der Antriebseinheit 200 auf den Rollenkörper 100 zu übertragen.

Figur 5 zeigt die Antriebseinheit 200 mit der daraus in axialer Richtung zur Kupplungseinheit vorstehenden Abtriebswelle 231 . Die Abtriebswelle 231 weist einen sechskantförmigen Querschnitt auf und ist mit einer Innengewindebohrung in axialer Richtung koaxial zur Mittellängsachse versehen.

Ein Ruckdämpferelement 240 ist als Zwei-Komponenten-Bauteil ausgeführt und weist einen Ringkörper 241 aus einem ersten Kunststoff auf, in dem ein im Querschnitt sechskantförmiger Hohlraum sich axial erstreckt, der kongruent zum Sechskant der Abtriebswelle 231 ausgebildet ist. Mittels dieses Hohlraums kann der Ruckdämpfer drehmomentfest auf der Abtriebswelle 231 befestigt werden. Zur Sicherung dieser Lage ist in einem von der Antriebseinheit abweisenden Ende des Ruckdämpfers eine axiale Bohrung in den metallischen Grundkörper bereitgestellt, durch die eine Schraube 250 eingeführt und im Innengewinde der Abtriebswelle befestigt werden kann. Die Schraube wird mittels zweier Unterlegscheiben 251a, b aus einem gummielastischen Material befestigt, um die unerwünschte Erzeugung von Radialkräften durch das Anziehen der Schraube und der daraus folgende unerwünschte Verspannungen zu vermeiden.

Der äußere Umfang des metallischen Grundkörpers 241 ist zahnradförmig mit sechs Zähnen 242a-f ausgebildet, die kongruent zu der inneren Umfangsfläche des Hohlraums 302 der Spannbuchse ausgeführt sind. Der äußere Umfang des Ruckdämpfers 240 ist mit einem zweiten Kunststoff beschichtet, um hierdurch sowohl in radialer Richtung als auch in Umfangsrichtung eine Stoßdämpfung zwischen der Abtriebswelle 231 und der Kupplungseinheit 300 zu bewirken. Der zweite Kunststoff weist einen niedrigeren Elastizitätsmodul als der erste Kunststoff auf. Beispielsweise kann der zweite Kunststoff ein Elastomer wie ein gummielastisches Material sein, wohingegen der erste Kunststoff ein hochfester, steiferer Kunststoff wie Polyamid sein kann. Insbesondere kann der Ruckdämpfer hergestellt sein, indem der erste Kunststoff mit dem zweiten Kunststoff umspritzt wird, sodass dieses Bauteil in einem Spritzgussprozess hergestellt werden kann. Alternativ könnte auch ein Gummi-Metall-Element eingesetzt werden.

Die äußere Umfangsfläche des Ruckdämpfers, welche im Kontakt zur Spannbuchse steht, ist mit einer leicht balligen Geometrie ausgeführt. Hierdurch wird eine in geringem Ausmaß kardanische Ankopplung zwischen Ruckdämpfer und Spannbuchse erzielt, welche zu einer praktisch vollständigen Vermeidung von Radialkräften auf das Getriebausgangslager bewirkt, wenn toleranzbedingte Winkelfehler auftreten. Dies sorgt für eine weitere Absenkung dea Geräuschniveaus und eine lange Lebensdauer des Getriebeausgangslagers.

Wie aus Figur 6 ersichtlich, kann der Ruckdämpfer 240 vollständig in den Hohlraum 302 der Spannbuchse eingeführt und drehmomentfest darin verankert werden. Dabei erfolgt keine axiale Festsetzung des Ruckdämpfers in Bezug auf die Spannbuchse sondern der Ruckdämpfer bleibt axial beweglich zur Spannbuchse im montierten Zustand.

Aus Figur 6 ist weiterhin ersichtlich, dass die Kupplungseinheit durch ihre unabhängig von der Montage der Antriebseinheit erfolgende Montage im Innenraum des Rollenkörpers mit einem Spiralfederring auf dem Außenumfang der Spannbuchse eine hohe koaxiale Präzision und Toleranz gegenüber axialen Toleranzen zugleich hinsichtlich der Lage zur Mittellängsachse und damit Drehachse des Rollenkörpers erreicht. Nachdem die Kupplungseinheit auf diese Art reibschlüssig im Innenraum des Rollenkörpers festgesetzt ist, kann die Antriebseinheit mit daran vormontiertem Ruckdämpfer axial in den Rollenkörper eingeschoben werden und hierbei der drehmomentübertragende Formschluss zwischen dem Ruckdämpfer und der Kupplungseinheit hergestellt werden. Durch einerseits und insbesondere die hohe Koaxialität der Spannbuchse in Bezug auf die Drehachse des Rollenkörpers und damit einhergehende präzise Zentrierung der Innenraumflächen der Spannbuchse zur Aufnahme des Ruckdämpfers werden radiale Kräfte auf die Abtriebswelle des Getriebes praktisch vollständig vermieden. Weiterhin werden aufgrund der Möglichkeit, dass die Abtriebswelle in Bezug auf die Kupplungseinheit mit axialer Beweglichkeit montiert wird und montiert bleibt, auch die Einwirkung axialer Kräfte auf die Abtriebswelle und damit das Planetengetriebe der Antriebseinheit praktisch vollständig vermieden.

Mit der erfindungsgemäßen Förderrolle wird somit ein effizienter und fehlertoleranter Montagevorgang und eine wirtschaftlich effiziente Fertigung der Bauteile mit den für die Präzision erforderlichen Toleranzen ermöglicht. Weiterhin wird, wie aus Figur 6 ersichtlich, eine besonders kurze Bauweise der Kupplungseinheit realisiert mit der Möglichkeit, eine formschlüssige Verbindung zwischen Getriebeausgangswelle bzw. Abtriebswelle und Kupplungseinheit im Innenraum der Kupplungseinheit mit einem großen wirksamen übertragenden Außendurchmesser unterzubringen. Durch die mit der Erfindung erreichbare hohe Koaxialität der Positionierung der Kupplungseinheit in Bezug auf die Rotationsachse der Abtriebswelle und des Rollenkörpers wird zudem vermieden, dass geräuscherzeugende Radialkräfte auf die Abtriebswelle und das Getriebe einwirken.

## Patentansprüche

1. Motorbetriebene Förderrolle für Förderanlagen zum Fördern von Behältern, Paletten und dergleichen, mit
- einem Rollenkörper (100), dessen Außenumfangsfläche eine Auflagefläche für Fördergut darstellt,
- einer Antriebseinheit (200), die innerhalb eines Innenraums des Rollenkörpers angeordnet ist,
- einer zur Übertragung eines Drehmoments von der Antriebseinheit auf eine Innenumfangsfläche des Innenraums des Rollenkörpers ausgebildete Kupplungseinheit (300), welche
∘ eine Spannbuchse (310),
∘ einen zu der Spannbuchse axial beweglichen Spannring (320),
∘ ein Befestigungselement (340) zum Halten einer axialen Lage des Spannrings zu der Spannbuchse in einer gespannten Position, und
∘ einen Anpressring (330), der zwischen einer Spannfläche (311) der Spannbuchse und einer Spannfläche (321) des Spannrings in der gespannten Position festgesetzt ist und in der gespannten Position außenumfänglich im Reibschluss mit der Innenumfangsfläche (132) des Innenraums des Rollenkörpers ist,
umfasst,
**dadurch gekennzeichnet, dass** die Spannbuchse (310) der Kupplungseinheit (300) einen inneren Hohlraum (302) aufweist und das Befestigungselement (340) radial auswärts von diesem Hohlraum angeordnet ist,
wobei die Spannbuchse (310) an einer Außenumfangsfläche (312) einen Absatz oder eine Nut (313) aufweist und das Befestigungselement elastisch vorgespannt zur formschlüssigen Verankerung in diesem Absatz/dieser Nut ist.

2. Förderrolle nach Anspruch 1,
**dadurch gekennzeichnet, dass**
- das Befestigungselement (340) integral an dem Spannring (320) ausgebildet ist, oder
- das Befestigungselement (340) ein von dem Spannring (320) separates Bauteil ist.

3. Förderrolle nach einem der vorhergehenden Ansprüche, **gekennzeichnet durch** einen Lagerzapfen (120), der
- Mittel zur drehmomentfesten Befestigung an einem Fördergestell aufweist,
- an dem der Rollenkörper (100) drehbar gelagert ist und
- an dem die Antriebseinheit (200) drehmomentfest befestigt ist.

4. Förderrolle nach einem der vorhergehenden Ansprüche, **dadurch gekennzeichnet, dass** der innere Hohlraum (302) der Spannbuchse (310) einen kleinsten Innendurchmesser aufweist und das Befestigungselement (340) ringförmig ausgebildet ist und einen Innendurchmesser aufweist, der größer als der kleinste Innendurchmesser ist.

5. Förderrolle nach einem der vorhergehenden Ansprüche, **dadurch gekennzeichnet, dass** das Befestigungselement (340) in der gespannten Position formschlüssig mit der Spannbuchse (310) verbunden ist.

6. Förderrolle nach einem der vorhergehenden Ansprüche, **dadurch gekennzeichnet, dass** das Befestigungselement (340) aus einer Spannposition reversibel elastisch in eine Montageposition verformbar ist und in der Montageposition vorgespannt ist zur Rückverformung in die Spannposition.

7. Förderrolle nach einem der vorhergehenden Ansprüche, **dadurch gekennzeichnet, dass** das Befestigungselement (340) ein Spiralfederring ist.

8. Förderrolle nach einem der vorhergehenden Ansprüche, **dadurch gekennzeichnet, dass** die Spannbuchse (310) drehmomentfest mit einer Abtriebswelle (231) der Antriebseinheit (200) gekoppelt ist.

9. Förderrolle nach einem der vorhergehenden Ansprüche, **dadurch gekennzeichnet, dass** ein Abschnitt der Antriebseinheit (200), insbesondere eine Abtriebswelle (231) oder ein Abschnitt eines Antriebsgetriebes innerhalb des Hohlraums der Spannbuchse (310) angeordnet ist.

10. Förderrolle nach einem der vorhergehenden Ansprüche, **dadurch gekennzeichnet, dass** die Spannfläche (311) der Spannbuchse (310) und/oder die Spannfläche (321) des Spannrings (320) außenumfänglich konisch ausgebildet ist/sind.

11. Förderrolle nach einem der vorhergehenden Ansprüche, **dadurch gekennzeichnet, dass** die Spannfläche (311) der Spannbuchse (310) und die Spannfläche (321) des Spannrings (320) außenumfänglich eine V-Form definieren, in die der Anpressring (330) eingelegt ist.

12. Förderrolle nach einem der vorhergehenden Ansprüche, **dadurch gekennzeichnet, dass** im Hohlraum (302) der Spannbuchse (310) ein elastomeres Kupplungselement (241) angeordnet ist, welches vorzugsweise formschlüssig in die Drehmomentübertragung zwischen Antriebseinheit (200) und Spannbuchse zwischengekoppelt ist.

13. Förderrolle nach dem vorhergehenden Anspruch, **dadurch gekennzeichnet, dass** das elastomere Kupplungselement (241) aus einem ersten und einem zweiten Material besteht, wobei das zweite Material eine geringere Steifigkeit als das erste Material aufweist und das Kupplungselement so als Ruckdämpfer wirkt und/oder dass die äußere, im Kontakt zur Spannbuchse (310) stehende Umfangsfläche oder die innere, im Kontakt zur Getriebeausgangswelle stehende Innenfläche des Kupplungselements eine konvex gewölbte, vorzugsweise ballig ausgebildete Kontaktfläche aufweist zur kardanischen Aufhängung der Spannbuchse auf dem Kupplungselement bzw. zur kardanischen Aufhängung des Kupplungselementes auf der Getriebausgangswelle.

14. Verfahren zur Herstellung einer Förderrolle, insbesondere einer Förderrolle nach einem der vorhergehenden Ansprüche, mit den folgenden Schritten:
- Einführen einer Kupplungseinheit (300) mit einer Spannbuchse (310), einem axial zu der Spannbuchse beweglich gelagerten Spannring (320) und einem zwischen einer Spannfläche der Spannbuchse und einem Spannfläche des Spannrings angeordneten Anpressring (330) in den Innenraum eines Rollenkörpers (100),
- Anpressen einer Außenumfangsfläche des Anpressringes an die Innenumfangsfläche (132) des Innenraums des Rollenkörpers zur Erzeugung einer reibschlüssigen drehmomentübertragenden Verbindung, indem die Spannfläche der Spannbuchse und die Spannfläche des Spannrings axial aufeinander zu bewegt und der Anpressring dazwischen eingespannt und nach radial auswärts verformt wird,
- Festsetzen des Spannrings an der Spannbuchse in der gespannten Position mittels ein Befestigungselementes (340), und
- Einführen einer Antriebseinheit (200) in den Innenraum des Rollenkörpers
- Drehmomentfestes Verbinden einer Abtriebswelle (231) der Antriebseinheit mit der Spannbuchse, vorzugsweise durch eine formschlüssige Verbindung,
- Drehmomentfestes Verbinden der Antriebseinheit an einem Lagerzapfen (120), der Mittel zur drehmomentfesten Befestigung an einem Fördergestell aufweist, und
- drehbares Lagern des Rollenkörpers an dem Lagerzapfen,
- wobei die Spannbuchse (310) an einer Außenumfangsfläche (312) einen Absatz oder eine Nut (313) aufweist und das Befestigungselement elastisch vorgespannt in diesem Absatz/dieser Nut formschlüssig verankertwird.

15. Verfahren nach Anspruch 14, **gekennzeichnet durch** die Schritte: Befestigen des Befestigungselement (340) radial auswärts von einem inneren Hohlraum der Spannbuchse (310) der Kupplungseinheit (300).

16. Verfahren nach Anspruch 14 oder 15, **dadurch gekennzeichnet, dass** die Abtriebswelle der Antriebseinheit (200) drehmomentfest mit der Spannbuchse (310) verbunden wird nach dem die Außenumfangsfläche des Anpressringes (330) an die Innenumfangsfläche des Innenraums des Rollenkörpers (100) zur Erzeugung einer reibschlüssigen drehmomentübertragenden Verbindung angepresst wurde.

## Claims

1. A motor-operated conveyor roller for conveyor systems for the purpose of conveying containers, palettes, and the like, having
- a roller body (100) with an outer peripheral surface which constitutes a contact surface for conveyed goods,
- a drive device (200) which is arranged inside an interior space of the roller body,
- a coupling device (300) designed to transmit a torque from the drive device to an inner peripheral surface of the interior space of the roller body, having
∘ a clamping bushing (310),
∘ a clamping ring (320) which can move axially relative to the clamping bushing,
∘ a fastener element (340) for the purpose of holding an axial-mounting clamping ring against the clamping bushing in a tensioned position, and
∘ a thrust collar (330) which is fixed in the tensioned position between a contact surface (311) of the clamping bushing and a contact surface (321) of the clamping ring, and which in the tensioned position has a friction-fit connection via the outer periphery thereof to the inner peripheral surface (132) of the interior space of the roller body,
**characterized in that** the clamping bushing of the coupling element has an inner hollow space (302), and the fastener element (340) is arranged outward from the radial center of this hollow space, wherein the clamping bushing (310) has a shoulder or a groove (313) on an outer peripheral surface (312), and the fastener element is elastically pre-tensioned for a form-fit anchoring in this shoulder/this groove.

2. A conveyor roller according to claim 1,
**characterized in that**
- the fastener element is designed as an integral component of the clamping ring, or
- the fastener element is a separate component from the clamping ring.

3. A conveyor roller according to one of the previous claims,
**characterized by** a bearing pin (120) which
- has means for the torque-proof attachment thereof to a conveyor frame system,
- on which the roller body (100) is rotatably mounted, and
- on which the drive device (200) is attached in a torque-proof manner.

4. A conveyor roller according to one of the previous claims,
**characterized in that** the inner hollow space (302) of the clamping bushing has a smallest inner diameter, and the fastener element is designed with a circular shape and has an inner diameter which is larger than the smallest inner diameter.

5. A conveyor roller according to one of the previous claims,
**characterized in that** the fastener element (340) is connected to the clamping bushing (310) in a positive-fitting manner in the tensioned position.

6. A conveyor roller according to one of the previous claims, **characterized in that** the fastener element (340) can be reversibly, elastically deformed from a tensioned position into an assembly position, and in the assembly position is pre-tensioned for a return deformation into the tensioned position.

7. A conveyor roller according to one of the previous claims,
**characterized in that** the fastener element is preferably a spiral spring washer

8. A conveyor roller according to one of the previous claims,
**characterized in that** the clamping bushing is coupled to a drive shaft (231) of the drive device in a torque-proof manner.

9. A conveyor roller according to one of the previous claims,
**characterized in that** one segment of the drive device, particularly a drive shaft (231) or a segment of a drive gearing, is arranged inside the hollow space of the clamping bushing.

10. A conveyor roller according to one of the previous claims,
**characterized in that** the contact surface (311) of the clamping bushing and/or the contact surface (321) of the clamping ring is/are designed with a conical outer periphery.

11. A conveyor roller according to one of the previous claims,
**characterized in that** the contact surface (311) of the clamping bushing and the contact surface (321) of the clamping ring define a V-shape on the outer periphery thereof, into which the thrust collar is inserted.

12. A conveyor roller according to one of the previous claims,
**characterized in that** an elastomeric coupling element is arranged in the hollow space (302) of the clamping bushing which is preferably coupled in a positive-fitting manner in the power transmission train between the drive device and the clamping bushing.

13. A conveyor roller according to one of the previous claims,
**characterized in that** the elastomeric coupling element consists of a first and a second material, wherein the second material has a lower rigidity than the first material, and the coupling element therefore functions as a rearward damping element, and/or **in that** the outer peripheral surface which is in contact with the clamping bushing, or the inner surface of the coupling element which is in contact with the output shaft of the gearing, has a preferably convex contact surface for a gimbaled suspension of the clamping bushing on the coupling element and/or for the gimbaled suspension of the coupling element on the output shaft of the gearing.

14. A method for the production of a conveyor roller, particularly a conveyor roller according to one of the previous claims,
**characterized by** the following steps:
- insertion of a coupling device (300) having a clamping bushing (310), a clamping ring (320) which is mounted to move axially toward the clamping bushing, and a thrust collar (330) arranged between a contact surface of the clamping bushing and a contact surface of the clamping ring in the interior space of a roller body (100),
- pressing an outer peripheral surface of the thrust collar onto the inner peripheral surface (132) of the interior space of the roller body for the purpose of generating a friction-fit connection which transmits rotary torque, by moving the contact surface of the clamping bushing and the contact surface of the clamping ring axially toward each other, and tensioning the thrust collar between the two, wherein the thrust collar is deformed outwards from radial center,
- fixing the clamping ring on the clamping bushing in the tensioned position by means of a fastener element (340), and
- inserting a drive device (200) into the interior space of the roller body
- torque-proof connection of a drive shaft (231) of the drive device to the clamping bushing, preferably by means of a positive-fit connection,
- torque-proof connection of the drive device to a bearing pin (120) which has a means for the torque-proof attachment thereof to a conveyor frame system, and
- rotatable mounting of the roller body on the bearing pin, , wherein the clamping bushing (310) has a shoulder or a groove (313) on an outer peripheral surface (312), and the fastener element is elastically pre-tensioned for a form-fit anchoring in this shoulder/this groove.

15. A method according to claim 14,
**characterized by** the step:
Attachment of the fastener element outward from the radial center of a hollow inner space of the clamping bushing of the coupling element.

16. A method according to claim 14 or 15,
**characterized in that** the drive shaft of the drive device is connected to the clamping bushing in a torque-proof manner after the outer peripheral surface of the thrust collar has been pressed onto the inner peripheral surface of the inner space of the roller body for the purpose of generating a friction-fitting, rotary torque-transmitting connection.

## Revendications

1. Rouleau de transport entraîné par moteur pour des installations de transport servant à transporter des contenants, des palettes et similaires, avec
- un corps de rouleau (100), dont la surface périphérique extérieure constitue une surface de support pour des articles à transporter,
- une unité d'entraînement (200), qui est disposée dans un espace intérieur du corps de rouleau,
- une unité de couplage (300) réalisée pour transmettre un couple de rotation de l'unité d'entraînement à une surface périphérique intérieure de l'espace intérieur du corps de rouleau, laquelle comprend
-- une douille de serrage (310),
-- une bague de serrage (320) mobile de manière axiale par rapport à la douille de serrage,
-- un élément de fixation (340) servant à maintenir une position axiale de la bague de serrage par rapport à la douille de serrage dans une position serrée, et
-- une bague de compression (330), qui est immobilisée dans la position serrée entre une surface de serrage (311) de la douille de serrage et une surface de serrage (321) de la bague de serrage et est, dans la position serrée, en périphérie extérieure, en liaison par friction avec la surface périphérique intérieure (132) de l'espace intérieur du corps de rouleau,
**caractérisé en ce que** la douille de serrage (310) de l'unité de couplage (300) présente un espace creux (302) intérieur et l'élément de fixation (340) est disposé vers l'extérieur radialement depuis ledit espace creux,
dans lequel la douille de serrage (310) présente, au niveau d'une surface périphérique extérieure (312), un retrait ou une rainure (313) et l'élément de fixation est précontraint de manière élastique aux fins de l'ancrage par complémentarité de forme dans ledit retrait/ladite rainure.

2. Rouleau de transport selon la revendication 1,
**caractérisé en ce que**
- l'élément de fixation (340) est réalisé d'un seul tenant avec la bague de serrage (320), ou
- l'élément de fixation (340) est un composant séparé de la bague de serrage (320).

3. Rouleau de transport selon l'une quelconque des revendications précédentes, **caractérisé par** un tourillon de montage (120),
- qui présente des moyens servant à la fixation de manière solidaire en couple de rotation au niveau d'un châssis de transport,
- au niveau duquel le corps de rouleau (100) est monté de manière à pouvoir tourner, et
- auquel l'unité d'entraînement (200) est fixée de manière solidaire en couple de rotation.

4. Rouleau de transport selon l'une quelconque des revendications précédentes, **caractérisé en ce que** l'espace creux (302) intérieur de la douille de serrage (310) présente un diamètre intérieur le plus petit, et l'élément de fixation (340) est réalisé de manière annulaire et présente un diamètre intérieur, qui est plus grand que le diamètre intérieur le plus petit.

5. Rouleau de transport selon l'une quelconque des revendications précédentes, **caractérisé en ce que** l'élément de fixation (340) est relié, dans la position serrée, par complémentarité de forme à la douille de serrage (310).

6. Rouleau de transport selon l'une quelconque des revendications précédentes, **caractérisé en ce que** l'élément de fixation (340) peut être déformé d'une position de serrage élastiquement de manière réversible à une position de montage et est précontraint dans la position de montage aux fins de la déformation inverse dans la position de serrage.

7. Rouleau de transport selon l'une quelconque des revendications précédentes, **caractérisé en ce que** l'élément de fixation (340) est une bague à ressort hélicoïdal.

8. Rouleau de transport selon l'une quelconque des revendications précédentes, **caractérisé en ce que** la douille de serrage (310) est couplée de manière solidaire en couple de rotation à un arbre de sortie (231) de l'unité d'entraînement (200).

9. Rouleau de transport selon l'une quelconque des revendications précédentes, **caractérisé en ce qu'**une section de l'unité d'entraînement (200), en particulier un arbre de sortie (231) ou une section d'un mécanisme d'entraînement est disposé ou disposée à l'intérieur de l'espace creux de la douille de serrage (310).

10. Rouleau de transport selon l'une quelconque des revendications précédentes, **caractérisé en ce que** la surface de serrage (311) de la douille de serrage (310) et/ou la surface de serrage (321) de la bague de serrage (320) sont réalisées de manière conique en périphérie extérieure.

11. Rouleau de transport selon l'une quelconque des revendications précédentes, **caractérisé en ce que** la surface de serrage (311) de la douille de serrage (310) et la surface de serrage (321) de la bague de serrage (320) définissent en périphérie extérieure une forme en V, dans laquelle la bague de compression (330) est placée.

12. Rouleau de transport selon l'une quelconque des revendications précédentes, **caractérisé en ce qu'**est disposé, dans l'espace creux (302) de la douille de serrage (310), un élément de couplage (241) élastomère, lequel est couplé de préférence par complémentarité de forme dans la transmission de couple de rotation de manière intercalée entre l'unité d'entraînement (200) et la douille de serrage.

13. Rouleau de transport selon la revendication précédente, **caractérisé en ce que** l'élément de couplage (241) élastomère est constitué d'un premier et d'un deuxième matériau, dans lequel le deuxième matériau présente une rigidité inférieure à celle du premier matériau et l'élément de couplage agit ainsi en tant qu'amortisseur de secousses, et/ou que la surface périphérique extérieure se trouvant en contact avec la douille de serrage (310) ou la surface intérieure, se trouvant en contact avec l'arbre de sortie de mécanisme, de l'élément de couplage présente une surface de contact voûtée de manière convexe, de préférence réalisée de manière bombée, aux fins de la suspension à cardans de la douille de serrage sur l'élément de couplage ou aux fins de la suspension à cardans de l'élément de couplage sur l'arbre de sortie de mécanisme.

14. Procédé servant à fabriquer un rouleau de transport, en particulier un rouleau de transport selon l'une quelconque des revendications précédentes,
avec les étapes suivantes :
- d'introduction dans l'espace intérieur d'un corps de rouleau (100) d'une unité de couplage (300) avec une douille de serrage (310), une bague de serrage (320) montée de manière mobile axialement par rapport à la douille de serrage et une bague de compression (330) disposée entre une surface de serrage de la douille de serrage et une surface de serrage de la bague de serrage,
- de compression d'une surface périphérique extérieure de la bague de compression contre la surface périphérique intérieure (132) de l'espace intérieur du corps de rouleau pour générer une liaison à friction de transmission de couple de rotation en ce que la surface de serrage de la douille de serrage et la surface de serrage de la bague de serrage sont déplacées l'une vers l'autre de manière axiale et la bague de compression est enserrée de manière intercalée entre elles et est déformée vers l'extérieur radialement,
- d'immobilisation de la bague de serrage au niveau de la douille de serrage dans la position serrée au moyen d'un élément de fixation (340), et
- d'introduction d'une unité d'entraînement (200) dans l'espace intérieur du corps de rouleau,
- de liaison de manière solidaire en couple de rotation d'un arbre de sortie (231) de l'unité d'entraînement à la douille de serrage, de préférence par une liaison par complémentarité de forme,
- de liaison de manière solidaire en couple de rotation de l'unité d'entraînement au niveau d'un tourillon de montage (120), qui présente des moyens servant à la fixation de manière solidaire en couple de rotation au niveau d'un châssis de transport, et
- de montage de manière rotative du corps de rouleau au niveau du tourillon de montage,
- dans lequel la douille de serrage (310) présente, au niveau d'une surface périphérique extérieure (312), un retrait ou une rainure (313) et l'élément de fixation, précontraint de manière élastique, est ancré par complémentarité de forme dans ledit retrait/ladite rainure.

15. Procédé selon la revendication 14, **caractérisé par** les étapes :
de fixation de l'élément de fixation (340) vers l'extérieur radialement depuis un espace creux intérieur de la douille de serrage (310) de l'unité de couplage (300).

16. Procédé selon la revendication 14 ou 15,
**caractérisé en ce que** l'arbre de sortie de l'unité d'entraînement (200) est relié de manière solidaire en couple de rotation à la douille de serrage (310) après que la surface périphérique extérieure de la bague de compression (330) a été compressée contre la surface périphérique intérieure de l'espace intérieur du corps de rouleau (100) pour générer une liaison à friction de transmission de couple de rotation.
